# EUROPEAN PATENT SPECIFICATION

(11) **EP 1 506 363 B1**
(45) Date of publication and mention of the grant of the patent: **15.11.2006**
(21) Application number: 03722652.9
(22) Date of filing: 09.05.2003
(51) Int. Cl.: F16L 47/26, B29C 65/02

(54) **METHOD AND SYSTEM FOR FORMING A BRANCH IN A POLYMERIC PIPE, USING HEATED LIQUID IN ORDER TO PLASTICIZE A PIPE WALL SECTION WHICH IS TO BE DISPLACED OUTWARDLY TO FORM SAID BRANCH**
VERFAHREN UND SYSTEM ZUR HERSTELLUNG EINES ZWEIGS IN EINEM POLYMERROHR UNTER VERWENDUNG ERWÄRMTER FLÜSSIGKEIT ZUR PLASTIFIZIERUNG EINES ROHRWANDABSCHNITTS, DER ZUR BILDUNG DES ZWEIGS NACH AUSSEN VERSCHOBEN WERDEN SOLL
PROCEDE ET SYSTEME POUR FORMER UNE RAMIFICATION DANS UN TUYAU EN POLYMERE, AU MOYEN D'UN LIQUIDE CHAUFFE DESTINE A PLASTIFIER UNE SECTION DE PAROI DU TUYAU DEVANT ETRE EVASEE POUR FORMER LADITE RAMIFICATION

(30) Priority: 17.05.2002 FI 20020934
(43) Date of publication of application: 16.02.2005
(73) Proprietor: Oy KWH Pipe AB, 65370 Vasa (FI)
(72) Inventor: OOMMEN Ajay, 700/318 Moo 6 Soi 14 Amatanakorn I E, 20000 A.Muang Chonburi (TH)
(74) Representative: Eriksson, Svante Johan Christer
(86) International application number: PCT/FI2003/000362
(87) International publication number: WO 2003/098092

(56) References cited:
- US-A- 3 798 097
- US-A- 5 958 172
- DATABASE WPI Week 199535, Derwent Publications Ltd., London, GB; Class Q67, AN 1995-265974, XP002904911 & JP 7 167 367 A (SEKISUI CHEMI IND CO LTD) 04 July 1995
- DATABASE WPI Week 199629, Derwent Publications Ltd., London, GB; Class A14, AN 1996-282153, XP002904912 & JP 8 118 472 A (SEKISUI CHEM IND CO LTD) 14 May 1996

## Description

### BACKGROUND OF THE INVENTION

This invention relates to a method for forming a branch in a pipe of polymeric material. Formation of a branch in pipe causes several known problems, for instance weakness at the joint. Lack of strength may arise among other reasons due to lack of an adequate surface for providing a connection between the pipes to be joined. In order to provide an adequate joint between a branch pipe of a smaller diameter extending perpendicularly to a straight section of a main pipe having a larger diameter, particular problems will arise.

According to a known method a joint between a branch pipe and a main pipe having a larger diameter is formed by making a circular hole corresponding to the size of said branch pipe into the wall of the main pipe e.g. by using a hole saw or another suitable equipment. The pipes are then connected by welding the outer sidewall of the branch pipe to the inner sidewall of the main pipe. Another method of forming a branch in pipe is to cut out a V-shaped section from a main pipe and cutting one end of a branch pipe mating V-shape and sized to be received in the V-shaped opening in the main pipe. Connection of the branch pipe to the main pipe is achieved by welding the outer sidewall of the branch pipe to the sidewall of the main pipe. A sidewall weld connection is much more inferior than a joint connection between adjacent coaxial pipes.

It is also well known that pipes are subject to wear at locations where a pipe changes direction particularly if abrasive material is transported in the pipe. Excessive wear occurs generally at the joint. It is known to reinforce a joint by adding additional material to the pipe near the joint either onto the outside or onto the inside. However when the material is added onto the inside of the pipe (e.g. by a liner) the internal cross section of the pipe is reduced causing an impediment to a flow through the joint. It would not be cost effective to produce pipes for special joints having increased thickness for a small quantity of fittings in discussion. Another method to reinforce onto the exterior of a pipe near a joint is to use either a thermosetting polymer or additional polymer of same type as that in the pipe, which method will need an additional mould process.

### SUMMARY OF THE INVENTION

The object of the present invention is to build up a branch in pipe of any commonly available pipe size, which permits formation of a joint on the branch, which is as strong as a joint between coaxial pipes, preferably by using standard equipment. Further the object of the invention is to provide an inexpensive method employing the polymeric material of the pipe to form a branch without damaging the pipe and requiring little preparation to be carried out, which method will result in a finished branch having a prolonged life even when used under wearing conditions and causing no constriction of flow through the branch.

This is achieved with a method characterized by the steps:
- making a circular hole in the wall of a main pipe, said hole being considerably smaller than the size of a branch to be formed;
- applying an end of an outer cylindrical mould tightly against outer wall of the main pipe concentrically with said circular hole;
- introducing a forming member, having a conical nose, into the main pipe through one end;
- fixing the forming member to an end of a puller device brought into the main pipe through said circular hole;
- applying heat to a portion of the exterior surface of the pipe wall defined by said outer mould having a heating liquid supply and a heating liquid outflow from said mould, using a suitable liquid heated to a temperature less than the melting temperature of the polymeric material in order to plasticize but to prevent degradation of the polymeric material in the pipe wall which plasticized material is intended to form the branch;
- pulling the forming member gradually toward the exterior of the pipe through the plasticized wall portion coaxially with the cylindrical outer mould whereby the plasticized polymeric material of the pipe wall is displaced outwardly forming said branch, generally in the shape of a pipe section extending outwardly from the main pipe wall.

The liquid used for heating the polymeric material of the pipe is preferably oil, such as ethylene glycol or possibly silicone. Further features of the method according to the invention will appear from the attached dependent method claims.

The invention also concerns a system for forming a branch in a pipe made of polymeric material comprising:
- an equipment for making a circular hole in the wall of the pipe, said hole being considerably smaller than the size of a branch to be formed;
- a forming member with a conical nose to be introduced into the pipe,
- a pulling device to be connected to the conical forming member for pulling it through the hole in the pipe wall,
- a cylindrical mould having a free end toward which outer surface of said pipe is to be tightly pressed by means of the forming member connected to the pulling device, to define a circular portion of the pipe wall extending concentrically around said hole,
- a heating liquid supply and a heating liquid outflow from said mould for heating said portion of the exterior surface of the pipe.

The system according to the invention provides a lot of advantages, e.g. the use of a liquid medium for heating only that portion of the exterior surface of a main pipe, where a branch pipe is to be formed. Such a heating will enable fully controllable heating of the pipe material. The branch is formed when the forming member is pulled through the hole in the pipe wall. The cylindrical mould of the system forms a chamber for the heating liquid, when the pipe wall is pressed towards the lower end of said cylindrical mould by means of the forming member pulled by the pulling device of the system. Thus the main pipe will also be hold in position by the cooperating mould and the forming member, so no further fixture is needed.

Further features of the system according to the invention will appear from the enclosed dependent system claims.

The mould of the required diameter have a liquid inlet which allows liquid to flow while the pipe is pulled by the forming member under a low pressure such that no damages to the pipe surface is occurred. When the polymeric material in the heated portion of the pipe wall becomes plastic the forming member will gradually pass through the hole made in the pipe wall, said hole having a diameter considerably smaller than the inner diameter of the branch to be formed. The liquid is heated under controlled conditions in a heating device provided with suitable control means. The forming member is provided with a conical nose and sized to define an inside diameter of the branch to be formed. The nose of the forming member is connectable to a puller device outside the pipe for pulling the forming member through the hole in the pipe wall generally from the interior of the pipe to the exterior of the pipe.

### BRIEF DESCRIPTION OF THE DRAWINGS

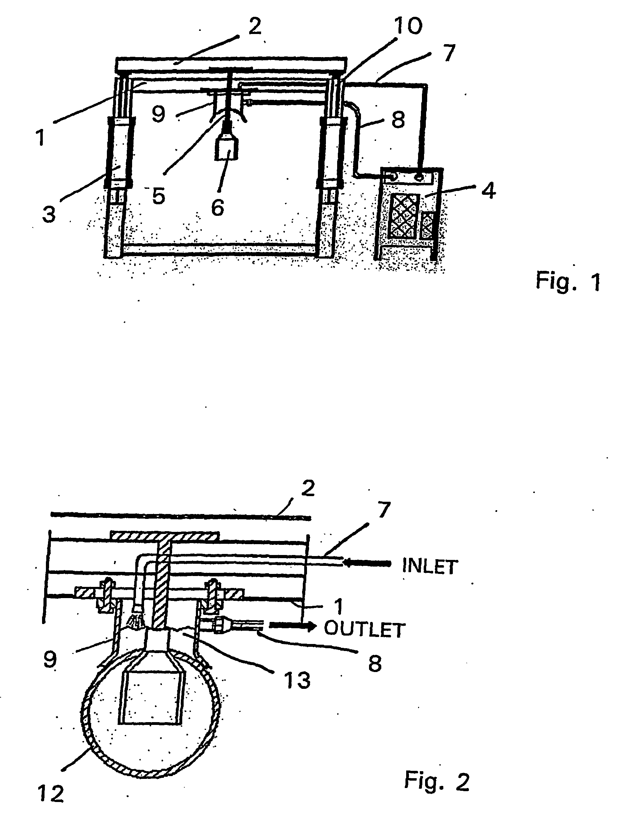

The present invention will now be described in more detail with reference to the accompanied drawings, wherein:
Fig: 1 is a schematic plan view of a system according to the invention for forming a branch in a pipe made of polymeric material with parts of pipe broken away.
Fig: 2 is a partial enlargement of the system shown in fig. 1 with a pipe in contact with the outer cylindrical mould of the system.
Fig: 3 is a schematic cross section of the pipe in fig 2 showing the forming member just prior to being pulled through the pipe.
Fig: 4 is a schematic cross section of the pipe showing the forming member in a stage with its nose partly pulled through the pipe.
Fig: 5 is a schematic section of the pipe and the mould showing the forming member in its final position.
Fig: 6 is a longitudinal section through a pipe having a branch.

### DETAIL DESCRIPTION OF A PREFERED EMBODIMENT

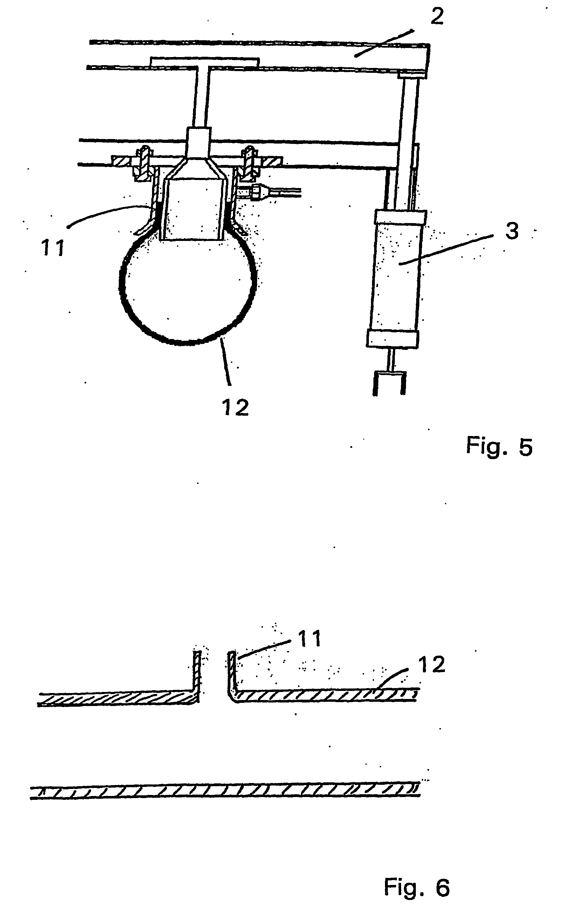

In the drawings a system for forming a branch 11 (Fig 6) in a pipe 12 is disclosed, which pipe is made from a polymeric material of polyolefines such as HDPE.

The system comprises a stationary frame 1 provided with vertical frame posts and a horizontal bar to which a mould 9 for a required pipe diameter is connectable. A pair of cylinder piston devices 3 is mounted to said frame posts and connected with their shafts 10 to a horizontal, vertically movable frame 2, positioned above the horizontal bar of the stationary frame 1.

The system further includes a cylindrical forming member 6 having a conical nose. The cylindrical body of said forming member 6 is sized to form an inner diameter of a branch 11 to be formed in a pipe 12. The end of the conical nose is connectable to an end of a puller rod 5 having its opposite end connected to the vertically movable bar 2. The connection between the forming member 6 and the puller rod 5 can be a thread connection using a connecting sleeve 16 at one end of the puller rod 5.

The mould 9 connected to the horizontal bar of the stationary frame 1 is intended to form a chamber 13 to receive a heating liquid when a mantle of a pipe 12 is pulled or pushed towards the bottom end of said mould 9. The heating liquid is preferably an oil such as ethylene glycol or silicone, which is pumped into the chamber 13 through a tube 7 capable of withstanding 150°C. The mould 9 is also provided with an outlet tube 8, through which the oil will flow back to an oil tank 4. The oil is preferably heated in said tank 4 by a heat exchanger.

In a preferred embodiment an oil-heating system manufactured by Tool Temp AG of Switzerland is used. The system, which is connected to an electric source, is controlled by means of a PID temperature controller. The tubes 7 and 8 and the mould are preferably heat insulated, in order to prevent loss of heat.

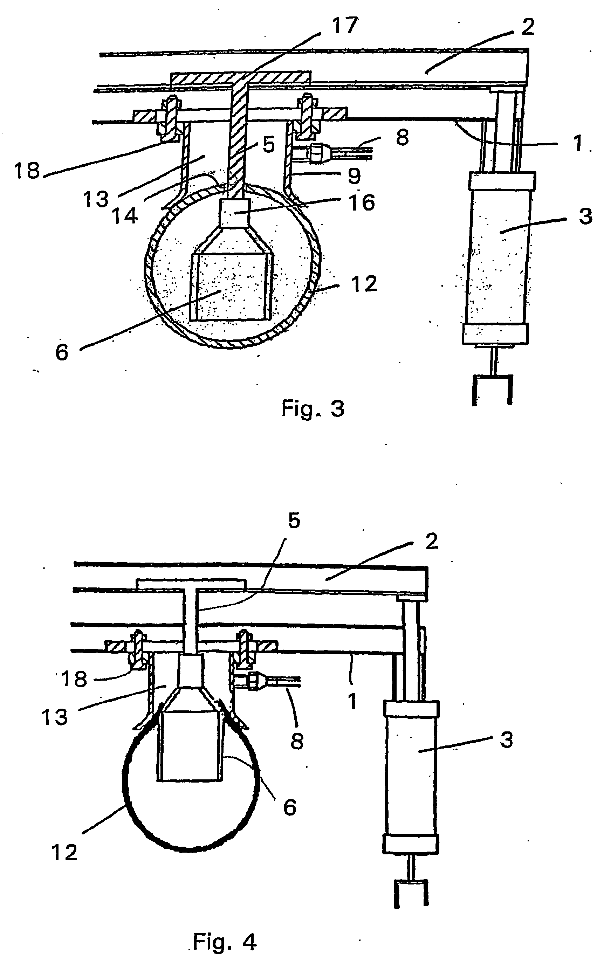

As shown in fig 3, the mould 9 is mounted on the frame 1 by means of bolts 18.

When a branch 11 is to be formed in a pipe 12, a small hole 14 (Fig. 3), somewhat larger than the puller rod 5 is made in the pipe wall, at a position where the branch 11 is to be formed. The forming member 6 is inserted into the pipe 12 through one end on said pipe and the end of the puller rod 5 is brought into said pipe 12 through the hole 14, whereupon the puller rod 5 is connected to the conical nose of the forming member 6. When the forming member 6 has been secured to the puller rod 5 the cylinder piston devices 3 are activated to slightly push the frame 2 and thus the forming member 6 upwards pressing the outer mantle of the pipe 12 against the bottom end of the mould 9 and simultaneously closing the hole 14 in the pipe wall, resulting in a tight contact between the pipe mantle and the bottom end of the mould 9. Heating liquid, e.g. ethylene glycol having a preset temperature is fed to the chamber 13 formed by the mould and the mantle of the pipe 12, heating a portion of the outer surface of the pipe wall defined by the bottom end of the mould 9. As the temperature reaches a level where the polymeric material in the pipe wall just changes from a solid state to a plastic state, the forming medium 6 is pulled outwards through the hole 14 by further activating the pair of cylinder piston devices 3, whereby the bar 2 and thus the forming member 6 will be pulled upwards The cylinder piston devices 3 are activated to pull the forming member 6 from the interior of the pipe 12 through the pipe wall to the exterior of the pipe to form the branch 11 by deforming the heated portion of the pipe wall, as schematically shown in Fig. 5. The supply of heating oil to the chamber 13 is stopped, all oil is returned to the oil tank 4 through tube 8, and the plastic material in the formed branch is allowed to cool, whereupon the pipe 12 with the formed branch is removed from the mould 9.

It is understood that depending on the diameter of the pipe and the size of the branch 11 to be formed, moulds 9 and forming members 6 of different sizes are to be used, because the mould is intended to define the outer diameter of the branch 11 and the forming member 6 is intended to define the inner diameter of the branch 11.The bottom end of the mould 9 is concavely shaped to match with the shape of the mantle of the main pipe 12.

The heating of the pipe wall is thus largely confined to the area through which the forming member 6 will be pulled. The heating by oil is carried out at an oil temperature adjusted to a level required by the plastic material in the pipe wall. During the heating stage the heating oil is circulated through tube 7 from the oil tank 4 to the mould 9 and through tube 8 back to the oil tank. When for instance a branch having a diameter of 450 mm is to be formed in a pipe 900 SDR 17 PE 100, the forming member 6 will be pulled to deform the plastic material in the pipe wall when the temperature of the plastic material reaches 130°C by applying a pressure of 50 bar for pulling the forming member 6, whereby a branch of 450 SDR 17 is received.

Due to the heating with oil the surface of the heated plastic material is prevented for being oxidized, because the surface of the pipe wall will be covered by oil, all the time the plastic material is at an elevated temperature. Consequently the surface will not be in contact with the outer air before the plastic material is cooled.

Preferably the diameter of the forming member 6 is somewhat larger than the inner diameter of a branch 11 to be formed, in order to allow a slight contraction of said inner diameter during cooling. When the forming member 6 is removed after sufficient cooling of the exterior surface of the pipe 12, the branch 11 thus formed will be suitable for application.

## Claims

1. Method for forming a branch in a pipe of polymeric material **characterized by** the steps:
- making a circular hole in the wall of a main pipe, said hole being considerably smaller than the size of a branch to be formed;
- applying an end of an outer cylindrical mould tightly against outer wall of the main pipe concentrically with said circular hole;
- introducing a forming member, having a conical nose, into the main pipe through one end;
- fixing the forming member to an end of a puller device brought into the main pipe through said circular hole;
- applying heat to a portion of the exterior surface of the pipe wall defined by said outer mould having a heating liquid supply and a heating liquid outflow from said mould, using a liquid heated to a temperature less than the melting temperature of the polymeric material in order to plasticize but to prevent degradation of the polymeric material in the pipe wall which plasticized material is intended to form the branch;
- pulling the forming member gradually toward the exterior of the pipe through the plasticized wall portion coaxially with the cylindrical outer mould whereby the plasticized polymeric material of the pipe wall is displaced outwardly forming said branch, generally in the shape of a pipe section extending outwardly from the main pipe wall.

2. Method according to claim 1, **characterized in that** the heated liquid is pumped into the outer mould as soon as the forming member by means of the puller device has been pulled against the pipe wall and simultaneously pressed the outer surface of the pipe wall into tight contact against the end of the outer mould, which liquid covers a portion of the outer pipe wall defined by said outer mould.

3. Method according to claim 2, **characterized in that** the heated liquid is continuously circulated between the interior of the outer mould and a tank provided with heating and control means.

4. Method according to claim 1, **characterized in that** the liquid is an oil, e.g. ethylene glycol or silicone.

5. Method according any of the preceding claims, **characterized in that** circulation of heated liquid is stopped and all liquid is removed from the outer mould when forming member has been pulled through pipe wall.

6. System for forming a branch in a pipe made of polymeric material, **characterized in that** it comprises:
- an equipment for making a circular hole in the wall of the pipe, said hole being considerably smaller than the size of a branch to be formed;
- a forming member with a conical nose to be introduced into the pipe,
- a pulling device to be connected to the conical forming member for pulling it through the hole in the pipe wall,
- a cylindrical mould having a free end toward which outer surface of said pipe is to be tightly pressed by means of the forming member connected to the pulling device, to define a circular portion of the pipe wall extending concentrically around said hole, and
- a heating liquid supply and a heating liquid outflow from said mould for heating said portion of the exterior surface of the pipe.

7. System according to claim 6, **characterized in that** said cylindrical mould is provided with a liquid supply and a liquid outlet communicating with a liquid tank provided with a heating device having suitable control means for maintaining a predefined liquid temperature.

8. System according to claim 7, **characterized in that** it comprises a stationary frame provided with vertical frame posts and a horizontal bar to which the mould for a predetermined pipe dimension is connectable, a pair of cylinder piston devises mounted to said frame posts and connected with their shafts to a horizontal, vertically movable frame 2, positioned above the horizontal bar of the stationary frame, one end of a puller rod being connected to said movable frame, the opposite end of said puller rod being connectable to the conical nose of a forming member inserted through one end into a pipe to be provided with a branch.

9. System according to claim 8, **characterized in that** the free end of the cylindrical mould is concavely shaped to match with the outer surface of the pipe to be provided with a branch.

## Patentansprüche

1. Verfahren zur Herstellung eines Zweigs in einem aus einem Polymermaterial bestehenden Rohr, **gekennzeichnet durch** die Schritte:
- Bildung einer kreisförmigen Öffnung in der Wand eines Hauptrohrs, wobei diese Öffnung erheblich kleiner ist als die Größe eines zu bildenden Zweigs;
- Anlegen eines Endes einer außen befindlichen zylindrischen Form gegen die Außenwand des Hauptrohrs dicht anliegend und konzentrisch mit der kreisförmigen Öffnung;
- Einführen eines mit einer kegelförmigen Spitze versehenen Verformungswerkzeugs in das Hauptrohr **durch** eines seiner Enden;
- Befestigung des Verformungswerkzeugs an einem Ende einer **durch** die kreisförmige Öffnung in das Hauptrohr eingeführten Zugvorrichtung;
- Zuführung von Wärme auf einen **durch** die außen befindliche, mit einem Heizflüssigkeitszulauf und einem Heizflüssigkeitsauslass versehene Form definierten Abschnitt der Außenfläche der Rohrwand, wobei eine auf eine unter der Schmelztemperatur des Polymermaterials liegende Temperatur erhitzte Flüssigkeit verwendet wird, um das Polymermaterial zu plastifizieren, aber eine Zersetzung des Polymermaterials in der Rohrwand zu verhindern, welches plastifizierte Polymermaterial zur Bildung des Zweigs vorgesehen ist;
- Ziehen des Verformungswerkzeugs allmählich in Richtung auf die Außenseite des Rohrs **durch** den plastifizierten Wandabschnitt hindurch koaxial mit der zylindrischen außen befindlichen Form, wobei das plastifizierte Polymermaterial der Rohrwand zur Bildung des genannten Zweigs, gewöhnlich in der Form eines aus der Wand des Hauptrohrs nach außen abgezweiten Rohrabschnitts, nach außen verdrängt wird.

2. Verfahren nach Anspruch 1, **dadurch gekennzeichnet, dass** die erhitzte Flüssigkeit in die außen befindliche Form gepumpt wird, nachdem das Verformungswerkzeug mittels der Zugvorrichtung bis zur Anlage an Rohrwand gezogen worden ist, wobei die Außenfläche der Rohrwand gleichzeitig in dicht anliegenden Kontakt gegen das Ende der außen befindlichen Form andrückt wird.

3. Verfahren nach Anspruch 2, **dadurch gekennzeichnet, dass** die erhitzte Flüssigkeit kontinuierlich zwischen dem Inneren der außen befindlichen Form und einem mit Heiz- und Steuermitteln versehenen Behälter zirkuliert wird.

4. Verfahren nach Anspruch 1, **dadurch gekennzeichnet, dass** die Flüssigkeit ein Öl, z.B. Ethylenglukol oder Silikon ist.

5. Verfahren nach einem der vorangehenden Ansprüche, **dadurch gekennzeichnet, dass** die Zirkulation der erhitzten Flüssigkeit gestoppt wird, und die ganze Flüssigkeit aus der außen befindlichen Form entfernt wird, nachdem das Verformungswerkzeug durch die Rohrwand hindurch gezogen worden ist.

6. System zur Herstellung eines Zweigs in einem aus einem Polymermaterial hergestellten Rohr, **dadurch gekennzeichnet, dass** es umfasst:
- eine Vorrichtung zum Bilden einer kreisförmigen Öffnung in der Wand des Rohrs, wobei die Öffnung erheblich kleiner ist als die Größe des zu bildenden Zweigs;
- ein in das Rohr einzuführendes, mit einer kegelförmigen Spitze versehenes Verformungswerkzeug;
- eine Zugvorrichtung, die zum Ziehen des kegelförmigen Verformungswerkzeugs durch die in der Wand des Rohrs befindlichen Öffnung mit diesem verbindbar ist;
- eine zylindrische Form, die ein freies Ende aufweist, gegen das die Außenfläche des Rohrs mittels des mit der Zugvorrichtung verbundenen Verformungswerkzeugs dicht anliegend andrückbar ist, um den kreisförmigen, sich konzentrisch um die benannte Öffnung erstreckenden Abschnitt der Rohrwand zu definieren; und
- einen Heizflüssigkeitszulauf und einen Heizflüssigkeitsauslass zum Erwärmen des besagten Abschnitts der Außenfläche des Rohrs.

7. System nach Anspruch 6, **dadurch gekennzeichnet, dass** die zylindrische Form mit einem Heizflüssigkeitszulauf und einem Heizflüssigkeitsauslass versehen ist, die mit einem Flüssigkeitsbehälter verbunden sind, der mit einer Heizvorrichtung versehen ist, die geeignete Mittel zur Aufrechterhaltung einer vorgegebenen Temperatur aufweist.

8. System nach Anspruch 7, **dadurch gekennzeichnet, dass** es einen feststehenden Ständer umfasst, der mit senkrechten Ständerstützen und einer horizontalen Stange versehen ist, mit der die Form für eine vorgegebene Rohrgröße verbindbar ist, sowie zwei ZylinderKolben-Vorrichtungen, die an die besagten Rahmenstützen montiert sind und jeweils mit ihrem Schaft mit einem horizontalen, senkrecht bewegbaren, oberhalb der horizontalen Stange des feststehenden Ständers angeordneten Gestell verbunden ist, wobei eines der Enden einer Zugstange mit dem besagten bewegbaren Gestell verbunden ist, während das gegenüberliegende Ende der Zugstange mit der kegelförmigen Spitze eines Verformungswerkzeugs verbindbar ist, welches Verformungswerkzeug in das mit einem Zweig zu versehenden Rohr durch eines seiner Enden eingebracht worden ist.

9. System nach Anspruch 8, **dadurch gekennzeichnet, dass** das freie Ende der zylindrischen Form zur Anpassung an die Außenfläche des mit einem Zweig zu versehenden Rohrs konkav ausgebildet ist,

## Revendications

1. Procédé pour former une ramification dans un tuyau en matière polymère, **caractérisé par** les étapes de :
création d'un trou circulaire dans la paroi d'un tuyau principal, le dit trou étant beaucoup plus petit que la dimension d'une ramification à former ;
application d'une extrémité d'un moule cylindrique extérieur fortement contre la paroi extérieure du tuyau principal, concentriquement au dit trou circulaire ;
introduction d'un élément de formage, ayant un nez conique, dans le tuyau principal par une extrémité de celui-ci ;
fixation de l'élément de formage à une extrémité d'un dispositif de traction introduit dans le tuyau principal à travers le dit trou circulaire ;
application de chaleur à une partie de la surface extérieure de la paroi du tuyau, définie par le dit moule extérieur qui comporte une entrée de liquide de chauffage et une sortie de liquide de chauffage du dit moule, au moyen d'un liquide chauffé à une température inférieure à la température de fusion de la matière polymère afin de plastifier la matière polymère de la paroi du tuyau mais d'éviter sa dégradation, cette matière plastifiée étant destinée à former la ramification ;
traction de l'élément de formage progressivement vers l'extérieur du tuyau à travers la partie de paroi plastifiée, coaxialement au moule extérieur cylindrique, de sorte que la matière polymère plastifiée de la paroi du tuyau est déplacée vers l'extérieur pour former la dite ramification, généralement sous la forme d'une longueur de tuyau s'étendant vers l'extérieur à partir de la paroi du tuyau principal.

2. Procédé selon la revendication 1, **caractérisé en ce que** le liquide chauffé est refoulé dans le moule extérieur dès que l'élément de formage a été tiré, au moyen du dispositif de traction, contre la paroi du tuyau, et simultanément la surface extérieure de la paroi du tuyau est pressée en contact serré contre l'extrémité du moule extérieur, ce liquide couvrant une partie de la paroi extérieure du tuyau définie par le dit moule extérieur.

3. Procédé selon la revendication 2, **caractérisé en ce que** le liquide chauffé circule continuellement entre l'intérieur du moule extérieur et une cuve comportant des moyens de chauffage et de commande.

4. Procédé selon la revendication 1, **caractérisé en ce que** le liquide est une huile, par exemple éthylène glycol ou silicone.

5. Procédé selon une quelconque des revendications précédentes, **caractérisé en ce que** la circulation du liquide chauffé est arrêtée et tout le liquide est enlevé du moule extérieur lorsque l'élément de formage a été tiré à travers la paroi du tuyau.

6. Système pour former une ramification dans un tuyau en matière polymère, **caractérisé en ce qu'**il comprend :
un équipement pour créer un trou circulaire dans la paroi du tuyau, le dit trou étant beaucoup plus petit que la dimension d'une ramification à former,
un élément de formage ayant un nez conique, à introduire dans le tuyau,
un dispositif de traction à attacher à l'élément de formage conique pour le tirer à travers le trou de la paroi du tuyau,
un moule cylindrique ayant une extrémité libre vers laquelle la surface extérieure du dit tuyau doit être fortement pressée au moyen de l'élément de formage connecté au dispositif de traction, pour définir une partie circulaire de la paroi du tuyau s'étendant concentriquement autour du dit trou, et
une amenée de liquide de chauffage et une évacuation de liquide de chauffage du dit moule, pour chauffer la dite partie de la surface extérieure du tuyau.

7. Système selon la revendication 6, **caractérisé en ce que** le dit moule cylindrique comporte une amenée de liquide et une évacuation de liquide en communication avec un réservoir de liquide pourvu d'un dispositif de chauffage ayant des moyens de réglage appropriés pour maintenir une température de liquide prédéfinie.

8. Système selon la revendication 7, **caractérisé en ce qu'**il comprend un châssis fixe avec des montants verticaux et une barre horizontale à laquelle le moule pour une dimension de tuyau prédéterminée est connectable, deux dispositifs à piston et cylindre fixés sur les montants de châssis et reliés par leurs tiges à un cadre horizontal, verticalement mobile 2, placé au-dessus de la barre horizontale du châssis fixe, une extrémité d'une tige de traction étant reliée au dit cadre mobile, l'extrémité opposée de la dite tige de traction étant connectable au nez conique d'un élément de formage inséré à travers une extrémité dans un tuyau à pourvoir d'une ramification.

9. Système selon la revendication 8, **caractérisé en ce que** l'extrémité libre du moule cylindrique est de forme concave pour concorder avec la surface extérieure du tuyau à pourvoir d'une ramification.
